Europäisches Patentamt

European Patent Office

Office européen des brevets

(11) Publication number: **0 094 242**
**B1**

(12) **EUROPEAN PATENT SPECIFICATION**

(45) Date of publication of patent specification: **23.08.89**

(21) Application number: **83302627.1**

(22) Date of filing: **10.05.83**

(51) Int. Cl.⁴: **B 29 C 61/02, H 02 G 15/18**

(54) **Device and method for sealing.**

(30) Priority: **11.05.82 GB 8213552**

(43) Date of publication of application:
**16.11.83 Bulletin 83/46**

(45) Publication of the grant of the patent:
**23.08.89 Bulletin 89/34**

(84) Designated Contracting States:
**AT BE CH DE FR IT LI NL SE**

(56) References cited:
**EP-A-0 042 262**
**DE-A-2 316 742**
**DE-A-2 818 702**
**FR-A-1 474 152**
**FR-A-2 222 887**
**GB-A- 869 393**
**GB-A-2 019 120**
**GB-A-2 081 361**

(73) Proprietor: **N.V. RAYCHEM S.A.**
**Diestsesteenweg 692**
**B-3200 Kessel-lo (BE)**

(72) Inventor: **Mendes, Luiz Neves**
**Diestsesteenweg 784**
**Kessel-Lo (BE)**

(74) Representative: **Benson, John Everett et al**
**Raychem Limited Intellectual Property Law**
**Department Faraday Road Dorcan**
**Swindon, Wiltshire SN3 5HH (GB)**

Courier Press, Leamington Spa, England.

## Description

This invention relates to a method for forming a seal between cables and a protective sleeve around them. It relates more especially to the sealing of cables at junctions between them which are to be protected by a heat recoverable sleeve, against mechanical damage and the ingress of water and other contaminants.

In British Patent Specification No. 1,155,470, the disclosure of which is incorporated herein by reference, there is described a heat-recoverable, more especially a heat-shrinkable sleeve that may be wrapped around an in-line junction, or splice, of two or more cables. This specification illustrates that special measures, including the provision of properly shaped sleeves, are needed when more than one cable is to enter the splice from one side. The provision of different shaped sleeves for a variety of orientations is inconvenient for many reasons, not least inventory costs.

In British Patent Specifications Nos. 1,529,356, 1,604,981, 1,604,984, 1,604,985, 1,604,986 and 2,019,120 there are described ways in which the problem of sealing an end of a heat-recoverable sleeve, through which two or more cables are to pass is overcome by the use of a clip or clamp. In these specifications, the disclosures of all of which are incorporated herein by reference, a number of different clip arrangements are described, but in general the clip is positioned over an open end of the sleeve in a location where two cables pass into the sleeve, or where the cables when installed will pass into the sleeve. The clips, of which many different shapes are described, may have two or more legs, of which one or more is or are positioned over the outer surface of the sleeve. In the simplest arrangement, a clip with two legs is positioned at the end of the sleeve with both legs outside the sleeve, pinching opposed portions together to form the sleeve, at its end, into two conduits. The reader is referred to the above-mentioned specifications for more details of clips and positioning of clips since, in general, the present invention may be put into effect on the arrangements described therein as it can be to other sealing methods, not there described, which employ clips.

Clips are used to form conduits in the ends of sleeves in a number of industries including telecommunications and electrical power distribution. Cables in these industries are frequently suspended from poles, and installation and repair of splices is made more difficult by the conditions in which the engineer has to work. It may not be practical, for example, fully to protect the installation site against weather, and rain or humid conditions may make the outer surface of the sleeve slippery. The orientation of the cables may be such as to require the splice to be made more or less vertically, in which case the clip or clips at the lower open end is or are especially at risk during the completion of installation. A number of proposals are described, for example in Specification No. 2,019,120, to contour the clip to prevent its milking-off during recovery of the sleeve, but difficulties are still experienced with retaining the clip on the end of the sleeve during the period before recovery of that part of the sleeve is commenced.

Contoured clips are also described in other fields. For example GB-A-869393 describes a clip for folding fabric materials comprising two members. One is longitudinally straight and has a single raised gripper portion extending in the direction of the other member. The other member is curved through the major portion of its length.

The present invention provides a method of forming a branch-off seal between a heat-shrinkable sleeve and at least two cables, which comprises the steps of:

(a) positioning the cables within the heat-shrinkable sleeve;

(b) forming at least two heat-shrinkable terminal conduits by positioning a clip having at least two legs over the outer surface of the heat-shrinkable sleeve at an open end thereof, wherein at least two of said legs are positioned externally of the sleeve and the cables are within the terminal conduits; and

(c) while the clip remains on the outer surface of the heat-shrinkable sleeve, applying heat so as to effect shrinkage of the sleeve and to form the desired seal;

the legs defining between them a channel that is curved through out and has at least one change in the direction of curvature, or that comprises a number of substantially straight, non-collinear, portions;

the channel causing the sleeve positioned therein to adopt a line other than straight; and

the clip being non-deformable to any appreciable extent by the sleeve.

The invention also provides a kit of parts suitable for forming a branch-off seal around at least two cables, comprising

(a) a heat-shrinkable sleeve; and

(b) a clip;

the clip.

(i) having at least one pair of adjacent spaced apart legs defining a channel between them that is curved throughout and has at least one change in the direction of curvature, or comprises a number of substantially straight non-collinear portions; the channel causing the sleeve positioned therein to adopt a line other than straight; and

(ii) being non-deformable to any appreciable extent by the sleeve

It will be appreciated that since the function of the clip is to force the sleeve to adopt a configuration other than straight within the channel the clip should itself not be deformable, either resiliently or otherwise, by the sleeve material, to any appreciable extent so as to allow the sleeve to adopt a straight configuration.

The substrates may be positioned in the conduits, and the clip may be positioned over the end of the sleeve, in either order or simultaneously.

For example, the substrates may first be positioned in the sleeve and then the conduits formed at the end of the sleeve by positioning the clip over the end of the sleeve, between the substrates. Whichever procedures is adopted, the sleeve will be caused by the shape of the channel to adopt and retain a line therein that is other than straight even before heat is applied to effect shrinkage.

The sleeve as applied may be closed in cross-section, e.g. a tubular sleeve, or it may be a wraparound sleeve, for example one having a longitudinal closure as described in the above-mentioned British Specification No. 1,155,470. The sleeve may alternatively be a closure member of the type described in Specification No. 1,529,356 in which, in certain embodiments, not all parts are heat-recoverable. In a preferred embodiment, the sleeve is a convoluted heat recoverable sleeve.

As indicated above, the clip of the present invention may be constructed and applied in any way in which the clips of the above-referenced specifications are applied, provided it has at least one channel which causes the portion or portions of the sleeve gripped by it to adopt a path other than straight. For example, the clips may have two, three or more legs, and the or each channel may be applied over one or more thicknesses of the sleeve. If the clip has more than one channel, one or more may be other than straight. The surfaces defining the channel, in addition to defining a channel other than straight, may be contoured or otherwise designed further to reduce the possibility of milk-off during recovery, though it will be appreciated that the undulations provided by the clip to prevent its premature loss also act to reduce milk-off. Thus, as discussed especially in Specification No. 2,019,120, the clip may change in shape before, during, or after recovery by the movement of the legs towards each other, the clip may be contoured, as by serrations or sinusoidal shaping, or by lack of parallelism in the legs.

Advantageously, however, at least for a substantial proportion of the length of the channel, the surfaces of the spaced apart legs forming the opposed walls defining the channel are parallel. As a result, when a sleeve is positioned in the channel, it will be in contact with at least one wall for most of its length and, if the sleeve has a wall thickness in the range for which the clip is designed, it will be in contact with both walls.

A clip constructed in accordance with the invention has especial advantage when used with sleeves having an internal coating, especially a mastic coating. It has been found that a clip according to the invention having a single channel may more readily be positioned over the end of a mastic coated sleeve than a two-channel, or trident, clip of which the channels are straight without, however, being more difficult to retain before recovery.

A clip constructed in accordance with the invention advantageously has a closed end and an open end, and the or each channel defined by adjacent legs correspondingly has a closed and an open end. The path adopted by the sleeve between the open and closed ends of the channel is to a greater or lesser extent tortuous. It may be curved throughout with at least one change in the direction of curvature, e.g., serpentine or generally undulating, more especially sinusoidal, or it may comprise a number of substantially straight, non-collinear portions, or it may comprise a mixture of such straight and curved portions. The open end of the channel is advantageously flared.

Preferably, the channel has at least five substantially straight portions, of which the first is closest to the closed end, the first and fifth portions being collinear and the third parallel thereto and not collinear therewith, the second portion joining the end of the first portion remote from the closed end to the end of the third closer to the closed end, and the fourth portion joining the end of the third portion remote from the closed end to the end of the fifth portion closer to the closed end. Advantageously, the angles between each pair of adjacent portions are obtuse, and preferably they are between 120° and 150°, more preferably about 135°. Advantageously, the channel is so constructed that the intersections between the portions are smoothed or rounded rather than angular or abrupt. As indicated above, the path may be more smoothly undulating, in particular generally sinusoidal. In any case, whether the portions are straight or curved, the number and amplitude of "waves" may be chosen to provide sufficient resistance in any particular case to slip under the worst working conditions (i.e. minimum friction) foreseeable without making it too inconvenient to slide the clip over a sleeve when frictional forces are at the maximum.

One form of clip constructed in accordance with the invention will now be described in greater detail, by way of example only, with reference to the accompanying drawing, in which:

FIGURE 1 is an isometric view of a clip,

FIGURE 2 is a view of the clip installed over a sleeve, and

FIGURE 3 is a view of the clip installed over a convoluted sleeve.

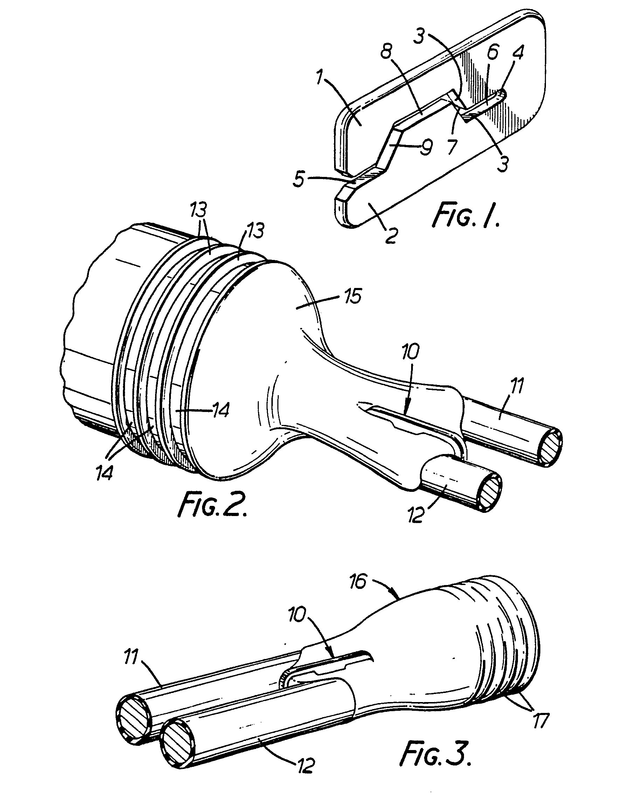

Referring now more especially to Figure 1, the clip has legs 1,2, the opposed walls 3,3 of which define a channel having a rounded closed end 4 and a flared open end portion 5. The channel, starting from the closed end 4, has a first straight portion 6 leading in the direction of the open end portion 5, a second straight portion 7 at about 135° to the first portion, and a third straight portion 8, parallel to the first, at about 135° to the second. The third portion 8 leads into a fourth straight portion 9 with an angle of about 135° between them, and the portion 9 leads at about the same angle into the open end portion 5 which is collinear with the portion 6. As can clearly be seen from Figure 1, the channel of the clip as presently preferred is such that it is not possible to draw a straight line that lies wholly within the channel from one end thereof to the other.

Figure 2 shows the clip, indicated generally by the reference numeral 10, in position after the completion of positioning two substrates, namely cables 11 and 12, within a heat-shrinkable sleeve 15, and shrinking the sleeve. The sleeve is arranged to conduct the cables 11 and 12 through and seal them within a duct (omitted for clarity), and is therefore described as a "duct seal". It is provided with external flanges 13 for retention of sealant 14 between them. At least the end portions of the seal 15 as supplied are heat-shrinkable and, as shown in Figure 2, opposed portions of one end between the cables 11 and 12 have been pinched together by applying the clip 10 over them to maintain them together during recovery by shrinkage.

The portions of the duct seal 15 positioned within the channel of the clip are caused to adopt a stepped line which reduces the possibility of displacement of the clip after application and especially before shrinkage of the seal.

Referring now more especially to Fig. 3, the clip 10 is shown in position over the end of a cable splice case indicated generally by the reference numeral 16. The splice case 16 is formed of a heat-recoverable sleeve having convolutions 17 which on free shrinkage of the sleeve disappear, leaving the sleeve in tubular form. As can be seen from Fig. 3, the central part of the sleeve (only one half of which is shown) is left unrecovered and in this state the convolutions allow the sleeve to be axially compressed or stretched by hand. If it is necessary to re-enter the sleeve for repair, the recovered end may be cut off, and the convoluted sleeve compressed to allow access to the splice. After the repair is effected, the spare length contained in the convolutions may be employed to allow stretching of the sleeve over the whole of the splice. The clip 10 functions in the same way in this embodiment as in that illustrated in Fig. 2, namely to seal the space between the cables 11, 12 where they enter the splice case 16, the shape of the channel in the clip assisting in retention of the convoluted sleeve before recovery.

The clip illustrated may conveniently be made of metal, for example, aluminium. For a sleeve of wall thickness about 1.5 mm before recovery, about 2.5 mm after full recovery, of which two thicknesses are to be positioned in the channel, the channel is advantageously about 3 mm deep. The clip may be 60 to 70 mm long, about 25 mm in height and about 4 mm thick. Portions 6, 8 and 10 of the channel may be about 15 mm in length, portions 7 and 9 being about 8 mm long.

**Claims**

1. A method of forming a branch-off seal between a heat-shrinkable sleeve and at least two cables, which comprises the steps of:.

(a) positioning the cables within the heat-shrinkable sleeve.

(b) forming at least two heat-shrinkable terminal conduits by positioning a clip having at least two legs over the outer surface of the heat-shrinkable sleeve at an open end thereof, wherein at least two of said legs are positioned externally of the sleeve and the cables are within the terminal conduits; and

(c) while the clip remains on the outer surface of the heat-shrinkable sleeve, applying heat so as to effect shrinkage of the sleeve and to form the desired seal;

the legs defining between them a channel that is curved throughout and has at least one change in the direction of curvature, or that comprises a number of substantially straight, non-collinear, portions;

the channel causing the sleeve positioned therein to adopt a line other than straight; and

the clip being non-deformable to any appreciable extent by the sleeve.

2. A method as claimed in claim 1, wherein the channel has an open end and a closed end, and has five substantially straight portions, the first being closest to the closed end, the first and fifth being collinear and the third parallel to but not collinear therewith, the second portion joining the end of the first portion remote from the closed end to the end of the third closer to the closed end, and the fourth joining the end of the third remote from the closed end to the end of the fifth closer to the closed end.

3. A method as claimed in claim 1 or claim 2, wherein the clip has one channel only.

4. A method as claimed in claim 3, wherein the sleeve has an internal mastic coating.

5. A method as claimed in any one of claims 1 to 4, wherein the sleeve is a convoluted sleeve.

6. A kit of parts suitable for forming a branch-off seal around at least two cables, comprising

(a) a heat-shrinkable sleeve; and

(b) a clip;

the clip;

(i) having at least one pair of adjacent spaced apart legs defining a channel between them that is curved throughout and has at least one change in the direction of curvature, or comprises a number of substantially straight non-collinear portions; the channel causing the sleeve positioned therein to adopt a line other than straight; and

(ii) being non-deformable to any appreciable extent by the sleeve.

7. A kit of parts as claimed in claim 6, wherein the channel has an open end and a closed end, and has five substantially straight portions, the first being closest to the closed end, the first and fifth being collinear and the third parallel to but not collinear therewith, the second portion joining the end of the first portion remote from closed end to the end of the third closer to the closed end, and the fourth joining the end of the third remote from the closed end to the end of the fifth closer to the closed end.

8. A kit of parts as claimed in claim 6, wherein the sleeve is a convoluted sleeve.

**Patentansprüche**

1. Verfahren zur Bildung einer Abzweigabdichtung zwischen einer wärmerückstellfähigen Muffe und wenigstens zwei Kabeln enthaltend die Schritte:

(a) Anbringen der Kabel in der wärmerückstellfähigen Muffe

(b) Bildung von wenigstens zwei wärmeschrumpfbaren endständigen Kanälen durch Anbringen einer Klammer mit wenigstens zwei Schenkeln über die äußere Oberfläche der wärmeschrumpfbaren Muffe an einem ihrer offenen enden, wobei sich wenigstens zwei der Schenkel außerhalb der Muffe befinden und die Kabel sich innerhalb der endständigen Kanäle befinden, und

(c) einsatz von Wärme, um die Muffe schrumpfen zu lassen und so die gewünschte Dichtung zu erzielen, während die Klammer auf der äußeren Oberfläche der warmeschrumpfbaren Muffe verbleibt;

wobei die Schenkel einen Schlitz bilden, der durchweg gekrümmt ist und wenigstens eine Änderung der Krümmungsrichtung aufweist, oder der eine Anzahl von im wesentlichen geraden, nicht kollinear verlaufenden Teilen aufweist;

der Schlitz auf die in ihm befindliche Muffe derart einwirkt, daß diese eine nicht gerade verlaufende Linie einnimmt; und

die Klammer durch die Muffe bis zu einem merkbaren Ausmaß nicht verformbar ist.

2. Verfahren nach Anspruch 1, worin der Schlitz ein offenes und ein geschlossenes ende und fünf im wesentlichen gerade Teilstücke aufweist, wobei das erste Teilstück sich am nahesten zum geschlossenen ende befindet, das erste und fünfte kollinear sind und das dritte parallel aber nicht kollinear dazu verläuft, das zweite Teilstück an das ende des ersten Teilstücks stößt, das vom geschlossenen ende entfernt ist, zu dem Ende des dritten, das sich näher am geschlossenen ende befindet, und das vierte Teilstück an das Ende des dritten stößt, das vom geschlossenen ende entfernt ist, zudem ende des fünften, das näher an dem geschlossenen ende liegt.

3. Verfahren nach einem der Ansprüche 1 oder 2, worin die Klammer nur einen Schlitz aufweist.

4. Verfahren nach Anspruch 3, worin die Muffe eine innere Mastixbeschichtung aufweist.

5. Verfahren nach einem der Ansprüche 1 bis 4, worin die Muffe eine gewundene Muffe ist.

6. Bausatz zur Bildung einer Abzweigabdichtung um wenigstens zwei Kabel, enthaltend

(a) eine wärmeschrumpfbare Muffe, und

(b) eine Klammer, wobei die Klammer

(i) wenigstens ein Paar im Abstand voneinander.

nebeneinander angeordnete Schenkel aufweist, die einen Schlitz zwischen sich bilden, welcher durchweg gekrümmt ist und wenigstens eine Änderung der Krümmungsrichtung aufweist, oder welche eine Anzahl von im wesentlichen geraden, nicht kollinear verlaufenden Teilen aufweist; der Schlitz auf die in ihm befindliche Muffe derart einwirkt, daß diese eine nicht gerade verlaufende Linie einnimmt; und

(ii) durch die Muffe bis zu einem merkbaren Ausmaß nicht verformbar ist.

7. Bausatz nach Anspruch 6, worin der Schlitz ein offenes und ein geschlossenes ende und fünf im wesentlichen gerade Teilstücke aufweist, wobei das erste Teilstück sich am nahesten zum geschlossenen ende befindet, das erste und fünfte kollinear sind und das dritte parallel aber nicht kollinear dazu verläuft, das zweite Teilstück an das ende des ersten Teilstücks stößt, das vom geschlossenen ende entfernt ist, zu dem ende des dritten, das sich näher am geschlossenen Ende befindet, und das vierte Teilstück an das ende des dritten stößt, das vom geschlossenen Ende entfernt ist, zu dem Ende des fünften, das näher an dem geschlossenen ende liegt.

8. Bausatz nach Anspruch 6, worin die Muffe eine gewundene Muffe ist.

**Revendications**

1. procédé pour former une obturation étanche, sur un branchement, entre un manchon thermorétractable et au moins deux câbles, qui comprend les étapes consistant:

(a) à placer les câbles à l'intérieur du manchon thermorétractable;

(b) à former au moins deux conduits terminaux thermorétractables en plaçant une attache comportant au moins deux branches sur la surface extérieure du manchon thermorétractable, à une extrémité ouverte de celui-ci, au moins deux desdites branches étant placées à l'extérieur du manchon et les câbles étant à l'intérieur des conduits terminaux;

(c) pendant que l'attache reste sur la surface extérieure du manchon thermorétractable, à appliquer de la chaleur afin de provoquer un retrait du manchon et de former l'obturation étanche souhaitée;

les branches définissant entre elles une rainure qui est incurvée d'un bout à l'autre et qui présente au moins un changement de direction de courbure, ou qui comprend un certain nombre de tronçons sensiblement droits, non colinéaires;

la rainure amenant le manchon, placé dans celle-ci, à suivre une ligne autre que droite;

l'attache ne pouvant pas être déformée par le manchon, dans une mesure notable quelconque.

2. procédé selon la revendication 1, dans lequel la rainure présente une extrémité ouverte et une extrémité fermée et comporte cinq tronçons sensiblement droits, le premier étant le plus proche de l'extrémité fermée, les premier et cinquième étant colinéaires, et le troisième leur étant parallèle, mais non colinéaire, le deuxième tronçon joignant l'extrémité du premier tronçon éloignée de l'extrémité fermée à l'extrémité du troisième tronçon la plus proche de l'extrémité fermée, et le quatrième tronçon joignant l'extrémité du troisième tronçon éloignée de l'extrémité fermée à l'extrémité du cinquième tronçon plus rapprochée de l'extrémité fermée.

3. Procédé selon la revendication 1 ou la revendication 2, dans lequel l'attache ne présente qu'une rainure.

4. Procédé selon la revendication 3, dans lequel le manchon comporte un revêtement intérieur de mastic.

5. Procédé selon l'une quelconque des revendications 1 à 4, dans lequel le manchon est un manchon convoluté

6. Ensemble de pièces convenant à la formation d'une obturation étanche sur un branchement autour d'au moins deux câbles, comprenant

(a) un manchon thermorétractable; et

(b) une attache;

l'attache:

(i) comportant au moins une paire de branches espacées, adjacentes, définissant entre elles une rainure qui est incurvée d'un bout à l'autre et qui présente au moins un changement de direction de courbure, ou qui comprend un certain nombre de tronçons sensiblement droits, non colinéaires;

la rainure amenant le manchon, placé dans celle-ci, à suivre une ligne autre que droite;

(ii) ne pouvant pas être déformée par le manchon dans une mesure notable quelconque.

7. Ensemble de pièces selon la revendication 6, dans lequel la rainure présente une extrémité ouverte et une extrémité fermée et comporte cinq tronçons sensiblement droits, le premier étant le plus proche de l'extrémité, fermée, les premier et cinquième étant colinéaires et le troisième leur étant parallèle, mais non colinéaire, le deuxième tronçon joignant l'extrémité du premier tronçon éloignée de l'extrémité fermée à l'extrémité du troisième tronçon plus rapprochée de l'extrémité fermée, et le quatrième tronçon joignant l'extrémité du troisième tronçon éloignée de l'extrémité fermée à l'extrémité du cinquième tronçon plus rapprochée de l'extrémité fermée.

8. Ensemble de pièces selon la revendication 6, dans lequel le manchon est un manchon convoluté.

EP 0 094 242 B1

FIG. 1.

FIG. 2.

FIG. 3.

1